# EUROPÄISCHE PATENTSCHRIFT

(11) **EP 1 789 654 B1**
(45) Veröffentlichungstag und Bekanntmachung des Hinweises auf die Patenterteilung: **23.08.2017**
(21) Anmeldenummer: 05796951.1
(22) Anmeldetag: 08.09.2005
(51) Int. Cl.: F01D 5/18, F01D 5/22

(54) **STRÖMUNGSMASCHINENSCHAUFEL MIT FLUIDISCH GEKÜHLTEM DECKBAND**
TURBINE ENGINE VANE WITH FLUID COOLED SHROUD
PALE DE TURBOMACHINE A COURONNE A REFROIDISSEMENT FLUIDIQUE

(30) Priorität: 16.09.2004 CH 15252004
(43) Veröffentlichungstag der Anmeldung: 30.05.2007
(73) Patentinhaber: General Electric Technology GmbH, 5400 Baden (CH)
(72) Erfinder: NEUHOFF, Heinz, 79761 Waldshut-Tiengen (DE); TSCHUOR, Remigi, CH-5210 Windisch (CH)
(74) Vertreter: General Electric Technology GmbH
(86) Internationale Anmeldenummer: PCT/EP2005/054448
(87) Internationale Veröffentlichungsnummer: WO 2006/029983

(56) Entgegenhaltungen:
- EP-A- 1 074 696
- US-A- 5 320 485
- US-A- 5 350 277
- US-A- 5 669 759
- US-A1- 2002 098 078
- PATENT ABSTRACTS OF JAPAN Bd. 015, Nr. 457 (M-1181), 20. November 1991 (1991-11-20) & JP 03 194101 A (TOSHIBA CORP), 23. August 1991 (1991-08-23)

## Beschreibung

### Technisches Gebiet

Die Erfindung betrifft eine Strömungsmaschinenschaufel mit fluidisch gekühltem Deckband gemäß dem Oberbegriff des Anspruchs 1.

### Stand der Technik

Aufgrund der in modernen Gasturbinen oder Gasturbogruppen heutzutage üblichen hohen Turbineneintrittstemperaturen müssen oftmals wenigstens die Schaufeln der ersten Turbinenstufen gekühlt werden.

Zur Kühlung der Schaufeln wird ein Kühlfluid, häufig Luft, die dem Verdichter entnommen wurde, durch Strömungskanäle innerhalb des Schaufelblattes geführt. Die Kühlung erfolgt durch konvektiven Wärmeübergang von den Kanalwänden auf das Kühlfluid. Das erwärmte Kühlfluid wird dann oftmals über Bohrungen im Bereich der Hinterkante der Schaufel in die Schaufelumströmung abgegeben. Eine in dieser Weise fluidisch gekühlte Turbinenschaufel ist beispielsweise aus der US-Patentschrift US 4 820 123 oder auch aus der europäischen Patentanmeldeschrift EP 0 649 975 A1 bekannt.

Aufgrund der zunehmend steigenden Turbineneintrittstemperaturen heutiger Gasturbinen ist es oftmals auch erforderlich, alle dem Heißgasstrom ausgesetzten Bauteile zu kühlen. Somit ist nicht nur das Schaufelblatt, sondern auch der Schaufelfuß zu kühlen. Ferner sind insbesondere Schaufeln von Statoren häufig mit Deckbandelementen ausgestattet, die dann ebenso wenigstens teilweise zu kühlen sind. Eine übliche Methode zur Kühlung von Deckbandelementen ist, ein Teil des Kühlfluids, das zur Kühlung des Schaufelblattes durch das Schaufelblatt strömt, durch eine in dem Deckbandelement angebrachte Kühlfluidbohrung zu führen und anschließend nach außen in die Umgebung der Schaufel abzugeben. Von hier gelangt das freigesetzte Kühlfluid über Bauteilspalte letztlich in die Hauptströmung der Turbine. Durch das Einströmen des Kühlfluids über Bauteilspalte werden jedoch einerseits Strömungsverluste der Hauptströmung verursacht. Ferner ist das abgegebene Kühlfluid oftmals für Kühlzwecke thermisch noch nicht verbraucht, so dass hierdurch auch ein thermodynamischer Verlust entsteht. Für eine geforderte Kühlleistung ist ein höherer Kühlfluidmassenstrom erforderlich. Beides führt zu einer Verschlechterung des Wirkungsgrades der Gasturbine oder Gasturbogruppe. Auch kann eine nicht angepasste Kühlung der Schaufeln zu einer verkürzten Lebensdauer der Schaufeln führen.

Bei aus dem Stand der Technik bekannten fluidisch gekühlten Deckbandelementen ist auch häufig eine ungleichförmige Verteilung der Kühlleistung zu beobachten. Hiervon betroffen sind oftmals insbesondere die Eckenbereiche der Deckbandelemente. Dies kann dazu führen, dass die Eckenbereiche der Deckbandelemente nicht hinreichend gekühlt werden und sich hier sogenannte Hot-Spots ausbilden.

Andererseits ist oftmals auch keine über das Deckbandelement gleichmäßige Verteilung der Kühlleistung erforderlich, sondern es gibt Bereiche, die stärker gekühlt werden müssen, und andere Bereich, die nur eine geringere Kühlung erforderlich machen. Die Kühlwirkung des Kühlfluids ist somit oftmals nicht optimal.

Aus US-A-5 320 485 ist eine Schaufel bekannt geworden, bei welcher die wesentlichen Merkmale des Oberbegriffs des unabhängigen Anspruchs 1 dieser Patentanmeldung hervorgehen. Eine wahlweise Platzierung der Strömungsführungselemente im Bereich der Abströmung aus dem Deckbandkühlkanal geht aus dieser Druckschrift nicht hervor.

### Darstellung der Erfindung

Hier will die Erfindung Abhilfe schaffen. Der Erfindung liegt somit die Aufgabe zugrunde, eine Strömungsmaschinenschaufel der eingangs genannten Art anzugeben, mit der die Nachteile des Standes der Technik vermindert oder vermieden werden.

Die Erfindung trägt dazu bei, eine mit einem Deckbandelement ausgeführte Strömungsmaschinenschaufel effektiver zu kühlen bzw. die Kühleffektivität eines zur Kühlung verwendeten Kühlfluidmassenstroms zu steigern. Weiterhin trägt die Erfindung dazu bei, die zu kühlenden Bereiche einer Strömungsmaschinenschaufel jeweils bedarfsangepasst zu kühlen.

Diese Aufgabe wird erfindungsgemäß durch die Strömungsmaschinenschaufel gemäss Anspruch 1 gelöst. Weitere vorteilhafte Ausgestaltungen der Erfindung finden sich in den Unteransprüchen.

Die erfindungsgemäß ausgebildete Strömungsmaschinenschaufel umfasst einen Schaufelfuß, einen Schaufelkopf und ein Schaufelblatt. Das Schaufelblatt erstreckt sich zwischen dem Schaufelfuß und dem Schaufelkopf in einer Schaufellängsrichtung und weist eine Saugseite sowie eine Druckseite auf. Des Weiteren ist der Schaufelkopf mit einem Deckbandelement ausgestattet. Innerhalb des Schaufelblattes verläuft wenigstens ein Durchströmkanal mit einer Erstreckung in Schaufellängsrichtung. Weiterhin ist wenigstens längs eines Abschnitts des Deckbandelements in dem Deckbandelement ein Deckbandkühlkanal ausgebildet, der über eine Öffnung mit dem Durchströmkanal verbunden ist und durch den im Betrieb der Strömungsmaschinenschaufel von einem Kühlfluid geführt wird. Der Deckbandkühlkanal ist vorzugsweise schlitzförmig ausgebildet. Ferner ist in dem Deckbandkühlkanal und/oder in einer Zu- oder Abströmung zu dem Deckbandkühlkanal wenigstens ein Strömungsführungselement zur Führung der durch den Deckbandkühlkanal strömenden Kühlfluidströmung angeordnet. Die erfindungsgemäße Strömungsmaschinenschaufel ist dadurch gekennzeichnet, dass ein erster Durchströmkanal an seinem schaufelfußseitigen Ende mit der Kühlfluidzuführung und an seinem schaufelkopfseitigen Ende mit dem schaufelkopfseitigen Ende eines zweiten Durchströmkanals verbunden ist, dass der zweite Durchströmkanal ist an seinem schaufelfußseitigen Ende mit einer Kühlfluidabführung verbunden ist, dass der Deckbandkühlkanal eine Einlassöffnung und eine Auslassöffnung aufweist, wobei die Einlassöffnung des Deckbandkühlkanals in den ersten Durchströmkanal und die Auslassöffnung des Deckbandkühlkanals in den zweiten Durchströmkanal mündet und dass nur im bereich der Auslassöffnung ein Strömungsleitblech angeordnet ist. Der Kühlfluidmassenstrom wird über den ersten Durchströmkanal dem Deckbandkühlkanal zugeführt, durchströmt den Deckbandkühlkanal und wird zumindest großteils über den zweiten Durchströmkanal wieder abgeführt.

Das Strömungsführungselement dient im Wesentlichen zur Führung wenigstens eines Teils der durch den Deckbandkühlkanal strömenden Kühlfluidströmung. Das Strömungsführungselement bewirkt hierbei, dass die Kühlfluidströmung den Deckbandkühlkanal in einer gewünschten Weise so durchströmt, dass eine bedarfsgerechte, innerhalb des Deckbandkühlkanals abschnittsweise veränderliche Kühlleistung erzielt wird. Einerseits wird somit die Kühleffizienz des eingesetzten Kühlfluids verbessert als auch andererseits die Gefahr der Ausbildung von Hot-Spots verringert, wodurch die Betriebssicherheit der Strömungsmaschinenschaufel insgesamt erhöht wird.

Das Strömungsführungselement kann darüber hinaus aber auch weitere Funktionen erfüllen. So läßt sich durch die erfindungsgemäße Anordnung eines Strömungsführungselements beispielsweise auch die für die Wärmeübertragung zur Verfügung stehende Bauteiloberfläche vergrößern. In dem betreffenden Bereich wird infolge der gegenüber dem Kühlfluidstrom vergrößerten Bauteiloberfläche eine erhöhte Wärmeübertragung und somit eine lokal erhöhte Kühlleistung erzielt.

Das wenigstens eine Strömungsführungselement kann in dem Deckbandkühlkanal angeordnet sein. Es kann aber zweckmäßig auch in der Zu- oder Abströmung zu dem Deckbandkühlkanal angeordnet sein, beispielsweise in dem Durchströmkanal nahe der Öffnung so, dass hierdurch eine Wirkung auf die Strömung in dem Deckbandkühlkanal hervorgerufen wird. In der Zuströmung ist dies beispielsweise dann der Fall, wenn ein Teil des in dem Durchströmkanal strömenden Kühlfluids durch das Strömungsführungselement an der Zuströmung zu dem Deckbandkühlkanal vorbeigeführt oder gezielt dem Deckbandkühlkanal zugeführt wird. In der Abströmung ist dies beispielsweise dann der Fall, wenn das aus dem Durchströmkanal ausströmende Kühlfluid durch das Strömungsführungselement in gezielter Weise abgeführt wird.

Gemäß einer zweckmäßigen Ausgestaltung der Erfindung ist das Strömungsführungselement als eine Kühlrippe ausgebildet. Zweckmäßig sind in dem Deckbandkühlkanal eine Mehrzahl von Kühlrippen angeordnet.

Die Kühlrippen sind mit einer Mindestdicke ausgeführt, bei der in nennenswertem Umfang Wärme durch die Kühlrippe abgeführt wird. Die Kühlrippen sind daher üblicherweise ca. 3-10 mm dick. Ferner erstrecken sich die Kühlrippen zweckmäßig über die gesamte lichte Höhe des Deckbandkühlkanals.

Kühlrippen wirken einerseits im Sinne eines Strömungsführungselements, indem die Strömung längs der Kühlrippe geführt wird. Weiterhin bewirken Kühlrippen aber auch eine lokale Erhöhung der Wärmeübertragung zwischen dem Kühlfluid und dem Deckbandkühlkanal. Die Kühlrippen sind hierfür vorzugsweise einteilig mit dem Deckbandkühlkanal ausgeführt.

Zweckmäßig ist die Kühlrippe bzw. sind die Mehrzahl von Kühlrippen in den Deckbandkühlkanal eingegossen. Die Kühlrippen werden somit bereits beim Gießen der Schaufel zusammen mit der Schaufel hergestellt. In der Regel wird nach dem Gießen keine Nachbearbeitung der Kühlrippen mehr erforderlich sein, insbesondere da eine erhöhte Oberflächenrauhigkeit eine bessere Wärmeübertragung erbringt, was hier zumeist erwünscht ist.

Der Deckbandkühlkanal verläuft in dem Deckbandelement zweckmäßig im Wesentlichen parallel zu einer Innenfläche des Deckbandelements und erstreckt sich zweckmäßig über das gesamte Deckbandelement. Das Deckbandelement ist in einen druckseitigen Bereich, einen zentralen Bereich und einen saugseitigen Bereich unterteilt.

Der Deckbandkühlkanal erstreckt sich wenigstens teilweise über den druckseitigen Bereich des Deckbandelements und ebenso wenigstens teilweise über den saugseitigen Bereich des Deckbandelements. Das Strömungsführungselement bzw. die Strömungsführungselemente ist/sind in dem druckseitigen Bereich und/oder in dem saugseitigen Bereich hierbei vorzugsweise so angeordnet, dass im Betrieb der Strömungsmaschinenschaufel die Kühlfluidströmung im druckseitigen Bereich des Deckbandkühlkanals eine größere Kühlleistung erbringt als im saugseitigen Bereich des Deckbandkühlkanals. Der druckseitige Bereich eines Deckbandelements ist üblicherweise aerodynamisch sowie auch thermisch höher belastet. Durch eine größere Kühlleistung der Kühlfluidströmung des Deckbandkühlkanals im druckseitigen Bereich des Deckbandelements kann der druckseitige Bereich des Deckbandelements thermisch entlastet werden, so dass das Deckbandelement insgesamt eine weitgehend homogene thermische Belastung erfährt.

Gemäß einer weiteren vorteilhaften Weiterbildung der Erfindung erfolgt eine Zuströmung des Kühlfluids zu dem Deckbandkühlkanal in einem ersten Bereich des Deckbandelements und eine Abströmung aus dem Deckbandkühlkanal in einem zweiten Bereich des Deckbandelements, wobei der erste Bereich in Bezug auf eine Hauptströmung der Strömungsmaschinenschaufel stromauf des zweiten Bereichs angeordnet ist. Die im druckseitigen Bereich des Deckbandkühlkanals angeordneten Strömungsführungselemente verlaufen dann zweckmäßig im Wesentlichen parallel zu der Strömungsrichtung der Hauptströmung und die im saugseitigen Bereich des Deckbandkühlkanals angeordneten Strömungsführungselemente im Wesentlichen quer zu der Strömungsrichtung der Hauptströmung. Dies führt dazu, dass sich die Kühlfluidströmung vermehrt in dem druckseitigen Bereich des Deckbandkühlkanals ausbildet. Gleichzeitig ergibt sich so aufgrund der höheren Strömungsgeschwindigkeiten des Kühlfluids im druckseitigen Bereich des Deckbandkühlkanals hier auch ein erhöhter Wärmeübergangskoeffizient im Vergleich zu dem saugseitigen Bereich des Deckbandkühlkanals.

Im Wesentlichen parallel zu der Strömungsrichtung der Hauptströmung umfasst Abweichungen von der Strömungsrichtung der Hauptströmung von 0° bis plus/minus 45°. Im Wesentlichen quer zu der Strömungsrichtung der Hauptströmung umfasst Abweichungen von der quer zur Strömungsrichtung der Hauptströmung verlaufenden Richtung von 0° bis plus/minus 45°.

Gemäß einer weiteren zweckmäßigen Ausgestaltung der Erfindung ist das Strömungsführungselement als ein Strömungsleitblech ausgebildet. Ein Strömungsleitblech erfüllt im Wesentlichen nur die Funktion der Strömungsführung. Wärmeleitung findet aufgrund der üblicherweise verhältnismäßig geringen Dicke des Strömungsleitblechs von nur wenigen Millimetern nur in untergeordnetem Umfang statt. Ein Strömungsleitblech kann, muss sich aber nicht immer über die gesamte lichte Höhe des Deckbandkühlkanals erstrecken.

Der erste Durchströmkanal und der zweite Durchströmkanal sind zweckmäßig über eine weitere, direkte Verbindung miteinander verbunden. Diese direkte Verbindung dient dazu, dass ein Teil des Kühlfluidgesamtmassenstroms unmittelbar von dem ersten Durchströmkanal in den zweiten Durchströmkanal gelangt, ohne zuerst durch den Deckbandkühlkanal strömen zu müssen. Somit kann der Kühlfluidgesamtmassenstrom größer sein, als der Kühlfluidmassenstrom, der für die Kühlung des Deckbandkühlkanals eingesetzt wird. Der über den ersten Durchströmkanal zugeführte Kühlfluidgesamtmassenstrom teilt sich somit auf in einerseits den Kühlfluidmassenstrom, der zur Kühlung des Deckbandelements durch den Deckbandkühlkanal geleitet wird, und andererseits einen weiteren Kühlfluidmassenstrom, der über die weitere Verbindung direkt in den zweiten Durchströmkanal gelangt.

Zweckmäßig ist der erste Durchströmkanal in dem Schaufelblatt angrenzend an eine Schaufelblatt-Vorderkante des Schaufelblatts angeordnet und der zweite Durchströmkanal in dem Schaufelblatt angrenzend an eine Schaufelblatt-Hinterkante des Schaufelblatts angeordnet. Das frische Kühlfluid strömt demzufolge zuerst entlang der thermisch hoch belasteten Schaufelblatt-Vorderkante, anschließend durch den Deckbandkühlkanal und abschließend entlang der thermisch geringer belasteten Schaufelblatt-Hinterkante. Dies führt zu einer angepassten Kühlung der Strömungsmaschinenschaufel sowie zu einer hohen Kühleffektivität des eingesetzten Kühlfluids.

Ferner ist zweckmäßig zwischen dem ersten Durchströmkanal und dem zweiten Durchströmkanal in dem Schaufelblatt weiterhin wenigstens ein Paar weiterer Durchströmkanäle mit jeweils einer Erstreckung in Schaufellängsrichtung angeordnet. Die Durchströmkanäle sind so miteinander verbunden, dass insgesamt ein serpentinenartiger Kanalverlauf in dem Schaufelblatt ausgebildet ist.

Erfindungsgemäß ist nur im Bereich der Auslassöffnung ein Strömungsleitblech angeordnet. Das im Bereich der Auslassöffnung angeordnete Strömungsleitblech sorgt hier für ein gleichmäßiges Einströmen des aus dem Deckbandkühlkanal austretenden Kühlfluids in den zweiten Durchströmkanal. Ist der zweite Durchströmkanal über eine weitere, direkte Verbindung mit dem ersten Durchströmkanal verbunden, so ist das Strömungsleitblech zweckmäßig so angeordnet, dass das aus dem Deckbandkühlkanal austretende Kühlfluid dem über die direkte Verbindung einströmenden Kühlfluid gleichmäßig zugemischt wird.

Gemäss einer bevorzugten Ausführungsform der Erfindung umfasst die Kühlfluidabführung wenigstens eine Ausströmöffnung, die im Bereich der Schaufelblatt-Hinterkante angeordnet ist. Zumeist wird es zweckmäßig sein, zur Kühlfluidabführung im Bereich der Schaufelblatt-Hinterkante eine Vielzahl von Ausströmöffnungen gleichmäßig verteilt über die Schaufelblattlänge anzuordnen. Das verbrauchte Kühlfluid strömt somit über die wenigstens eine Ausströmöffnung bzw. über die Vielzahl der Ausströmöffnungen in die Hauptströmung ab. Durch eine dem Fachmann bekannte Ausgestaltung der Ausströmöffnungen erfolgt die Abströmung hierbei vorteilhaft so, dass das abströmende Kühlfluid über der Schaufelblatt-Hinterkante stromab der Ausströmöffnungen einen Kühlfilm ausbildet. Hierdurch wird einerseits die Schaufelblatt-Hinterkante besonders effektiv gekühlt. Andererseits lassen sich so die durch die Zumischung des Kühlfluids der Hauptströmung erzeugten Mischungsverluste minimieren.

Gemäß einer zweckmäßigen Weiterbildung der Erfindung ist in wenigstens einem Eckenbereich des Deckbandkühlkanals wenigstens eine Öffnung angeordnet, die mit der Schaufelumgebung kommuniziert und über die im Betrieb der Strömungsmaschinenschaufel Kühlfluid aus dem Deckbandkühlkanal in die Schaufelumgebung strömt. Durch die Anordnung der wenigstens einen Öffnung in dem Eckenbereich des Deckbandkühlkanals wird zumindest ein Teil des in dem Eckenbereich befindlichen Kühlfluids durch die Öffnung in die Umgebung abgeführt. Durch den stetigen Abfluss von Kühlfluid durch die wenigstens eine Öffnung wird verhindert, dass sich in dem Eckenbereich ein Todwassergebiet ausbildet. Ein Todwassergebiet ist oftmals die Ursache für eine lokale Ausbildung eines Hot-Spots.

Gemäß einer zweckmäßigen Anwendung der Erfindung ist die Strömungsmaschinenschaufel als Turbinenschaufel einer Gasturbine oder einer Gasturbogruppe, insbesondere als eine Statorschaufel einer Turbine, weitergebildet.

Insbesondere ergeben sich große Vorteile hinsichtlich der Lebensdauer der Schaufeln, wenn alle Schaufeln eines Eintrittsleitrades einer Turbine in der erfindungsgemäßen Weise ausgebildet sind. Auch kann die Betriebsweise der Gasturbine dann dahingehend verändert werden, dass eine insgesamt höhere Eintrittstemperatur in die Turbine eingeregelt werden kann oder das Temperaturprofil über die Schaufelhöhe vergleichmäßigt werden kann. Heutzutage ist oftmals ein in Richtung der Begrenzungswände jeweils abfallendes Temperaturprofil der Turbineneintrittsströmung erforderlich, um eine Überhitzung der Begrenzungswände zu vermeiden.

Die erfindungsgemäß ausgeführte Strömungsmaschinenschaufel kann aber grundsätzlich auch in einem Rotor einer Gasturbine oder einer Gasturbogruppe Verwendung finden.

### Kurze Beschreibung der Zeichnungen

Die Erfindung wird nachfolgend anhand eines in den Figuren illustrierten Ausführungsbeispiels näher erläutert. Es zeigen:
- Figur 1: eine stark vereinfachte Darstellung einer Gasturbogruppe;
- Figur 2: einen Längsschnitt durch eine erfindungsgemäß ausgeführte Strömungsmaschinenschaufel;
- Figur 3: eine Detailansicht der Strömungsmaschinenschaufel aus Figur 2;
- Figur 4: das Deckbandelement aus Figur 2 in einer Untersicht.

In den Figuren sind nur die für das Verständnis der Erfindung wesentlichen Elemente und Bauteile dargestellt.

Das dargestellte Ausführungsbeispiel ist rein instruktiv zu verstehen und soll einem besseren Verständnis, aber nicht einer Einschränkung des Erfindungsgegenstandes dienen.

### Wege zur Ausführung der Erfindung

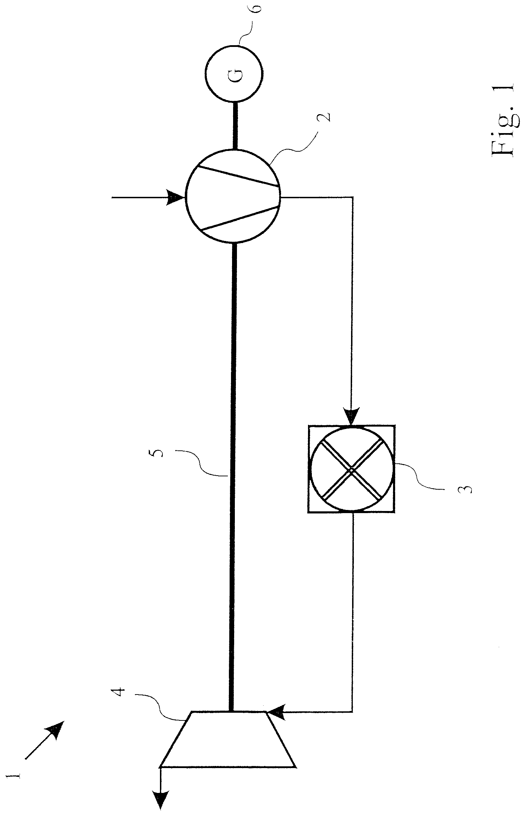

In Figur 1 ist in einer stark schematisierten Darstellung eine Gasturbogruppe 1 dargestellt, wie sie dem Fachmann geläufig ist und häufig beispielsweise zur Stromerzeugung oder für stationäre und mobile Antriebe, wie beispielsweise Flugzeugantriebe, Verwendung findet. Die beispielhaft dargestellte Gasturbogruppe umfasst als wesentliche Baugruppen einen Verdichter 2, eine Brennkammer 3 sowie eine Turbine 4. In dem Verdichter 2 wird eintretende Umgebungsluft verdichtet und der Brennkammer 3 zugeführt. In der Brennkammer 3 wird der verdichteten Luft Brennstoff beigemischt und das Gemisch verbrannt. Mittels der Turbine 4 wird das in der Brennkammer 3 erzeugte Heißgas arbeitsleistend entspannt. In der in Figur 1 dargestellten stationären Turbinenanlage ist die Turbine 4 über eine Welle 5 sowohl mit dem Verdichter 2 als auch mit einem weiteren Leistungsverbraucher 6, beispielsweise einem zur Stromerzeugung dienenden Generator, verbunden und treibt diese über die Welle 5 an. Selbstverständlich ist es auch möglich, die Gasturbogruppe mehrwellig, mit mehreren Turbinen und zwischengeordneten Brennkammern, mit mehreren Verdichtern und zwischengeordneten Kühlern, und dergleichen auszuführen. Diese Ausführungsformen sind dem Fachmann geläufig und stellen die Erfindung lediglich in einen anwendungsrelevanten Kontext, weshalb sie an dieser Stelle nicht weiter beschrieben werden.

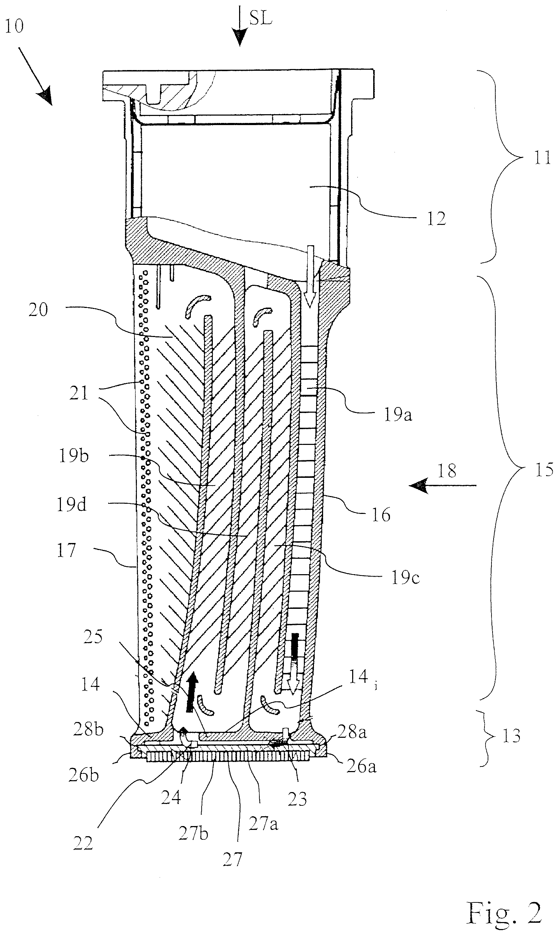

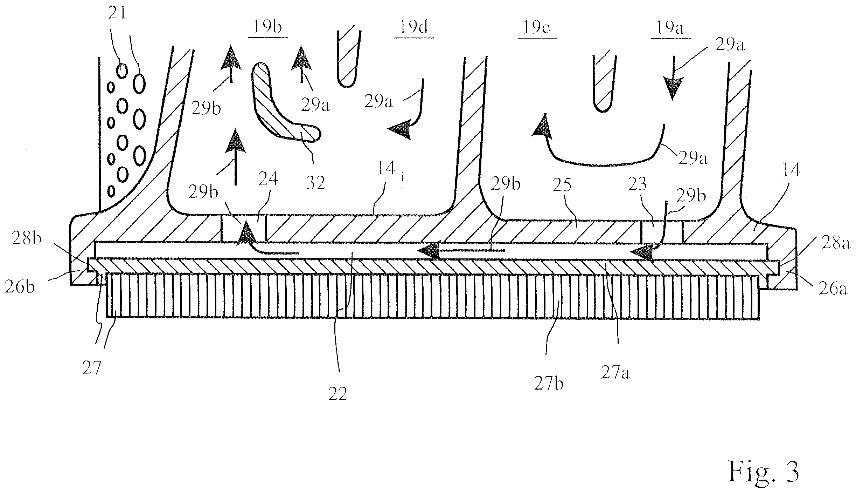

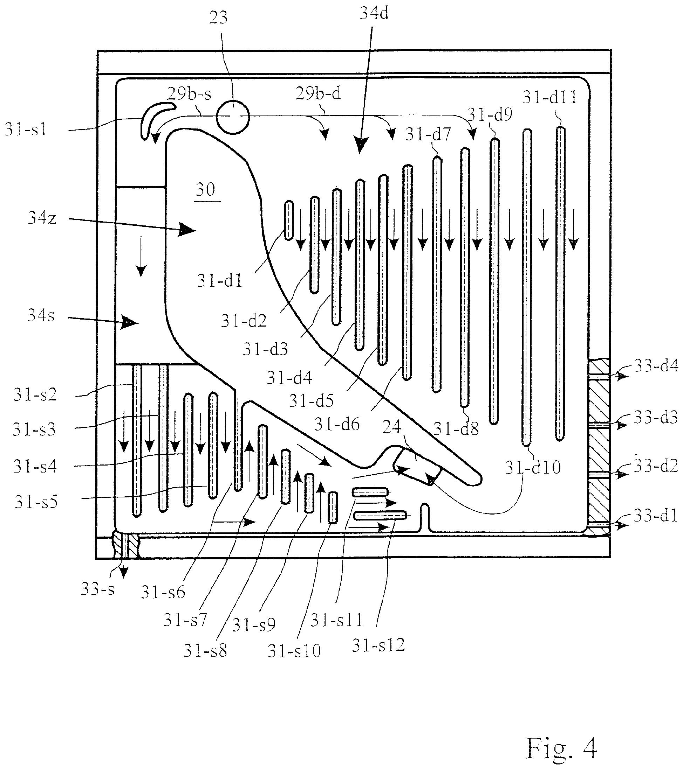

In den Figuren 2 bis 4 ist eine erfindungsgemäß ausgebildete Strömungsmaschinenschaufel 10 (kurz: Schaufel) dargestellt. Figur 2 zeigt einen Längsschnitt durch die erfindungsgemäß ausgeführte, fluidisch innengekühlte Schaufel 10, während Figur 3 den Bereich des Schaufelkopfes 13 der Schaufel 10 in einer Detailansicht wiedergibt. Figur 4 zeigt eine Untersicht auf das Deckbandelement 14 der Schaufel 10.

Die Schaufel 10 ist hier als Schaufel eines Stators einer Turbine, im Speziellen als Schaufel eines Eintrittsleitrades einer Turbine, ausgebildet und kann beispielsweise in der Turbine 4 der Gasturbogruppe 1 eingesetzt werden. Die Erfindung kann aber auch auf eine Rotorschaufel einer Turbine oder auf anderweitig zum Einsatz kommende Schaufeln angewendet werden.

Wie in Figur 2 dargestellt, umfasst die Schaufel 10 einen Schaufelfuß 11 mit einer Kühlfluidzuführung 12, einen Schaufelkopf 13, der mit einem Deckbandelement 14 ausgebildet ist, sowie ein Schaufelblatt 15. Das Schaufelblatt 15 erstreckt sich in einer Schaufellängsrichtung SL zwischen dem Schaufelfuß 11 und dem Schaufelkopf 13 und weist eine Schaufelblatt-Vorderkante 16 sowie eine Schaufelblatt-Hinterkante 17 auf.

Die Hauptströmung der Turbine durchströmt die Schaufel in Figur 2 gemäß dem Pfeil 18 von rechts nach links, wobei der Strömungskanal gehäuseseitig durch den Schaufelfuß 11 und nabenseitig durch das Deckbandelement 14 begrenzt wird.

Wie dem Längsschnitt gemäß Figur 2 zu entnehmen ist, sind innerhalb des Schaufelblattes insgesamt vier Durchströmkanäle 19a - 19d angeordnet, die sich jeweils im Wesentlichen in Schaufellängsrichtung SL erstrecken. Die Durchströmkanäle 19a - 19d sind an ihren Enden so miteinander verbunden, daß insgesamt ein serpentinenartiger Kühlkanalverlauf in dem Schaufelblatt 15 ausgebildet ist.

Der an die Schaufelblatt-Vorderkante 16 angrenzende Durchströmkanal wird hier als erster Durchströmkanal 19a und der an die Schaufelblatt-Hinterkante 17 angrenzende Durchströmkanal als zweiter Durchströmkanal 19b bezeichnet. Die zwischen dem ersten und dem zweiten Durchströmkanal angeordneten Durchströmkanäle werden in Strömungsrichtung der Hauptströmung als dritter Durchströmkanal 19c sowie als vierter Durchströmkanal 19d bezeichnet.

Der erste Durchströmkanal 19a ist an seinem schaufelfußseitigen Ende mit der Kühlfluidzuführung 12 und an seinem schaufelkopfseitigen Ende über den dritten und vierten Durchströmkanal 19c und 19d mit dem schaufelkopfseitigen Ende des zweiten Durchströmkanals verbunden. Der zweite Durchströmkanal wiederum ist schaufelfußseitig mit einem Kühlfluidabführkanal 20 verbunden, der sich längs der Schaufelblatt-Hinterkante 17 erstreckt. Weiterhin sind an der Schaufelblatt-Hinterkante 17 eine Vielzahl von Ausströmöffnungen 21 angeordnet, über die das Kühlfluid aus dem Kühlfluidabführkanal 20 in die Umgebung der Schaufel abströmt. Die Ausströmöffnungen 21 sind über die Schaufelblattlänge näherungsweise gleichmäßig verteilt angeordnet.

Als Kühlfluid wird hier Luft aus dem Verdichterbereich abgezweigt und über die Kühlfluidzuführung 12 dem ersten Durchströmkanal 19a zugeführt. Von hier aus strömt die Luft 29a dem serpentinenartigen Kühlkanalverlauf folgend durch das Schaufelblatt 15. Durch die im Vergleich zur heißen Turbinenhauptströmung niedrige Temperatur des Kühlfluids kommt es längs der Kanalwände der Durchströmkanäle zu einem konvektiven Wärmeübergang und somit zu einer Kühlung des Schaufelblatts 15. Am Ende des zweiten Durchströmkanals 19b gelangt das bis dahin erwärmte und somit weitgehend verbrauchte Kühlfluid in den Kühlfluidabführkanal 20 und verteilt sich von hier etwa gleichmäßig auf die Ausströmöffnungen 21. Über die Ausströmöffnungen 21 gelangt das Kühlfluid letztendlich auf die Außenseite des Schaufelblattes und somit in die Turbinenhauptströmung. Beim Ausströmen aus den Ausströmöffnungen 21 bildet das Kühlfluid an der Schaufelblatt-Hinterkante hier zusätzlich einen Kühlfilm aus, der die dünne Hinterkante vor der heißen Hauptströmung schützt.

Um neben dem Schaufelblatt 15 auch das Deckbandelement 14 zu kühlen, ist in dem Deckbandelement 14 ein Deckbandkühlkanal 22 angeordnet. Der hier schlitzförmig ausgebildete Deckbandkühlkanal 22 ist über eine Einlassöffnung 23 mit dem ersten Durchströmkanal 19a und über eine Auslassöffnung 24 mit dem zweiten Durchströmkanal 19b verbunden.

Das zur Kühlung des Deckbandelements 14 dienende Kühlfluid wird gemäß der in Figur 2 dargestellten Strömungsführung dem durch den ersten Durchströmkanal 19a zugeführten Kühlfluidgesamtmassenstrom entnommen und dem Deckbandkühlkanal 22 über die Einlassöffnung 23 zugeführt. Nach dem Durchströmen des Deckbandkühlkanals 22 wird der größte Teil des Kühlfluids über die Auslassöffnung 24 in den zweiten Durchströmkanal 19b abgeführt, wo das zur Kühlung des Deckbandelements 14 verwendete Kühlfluid 29b wieder mit demjenigen Kühlfluid 29a, das durch den dritten und vierten Durchströmkanal 19c und 19d geleitet wurde, zusammengeführt wird. Von hier aus gelangt das Kühlfluid gemeinsam in den Kühlfluidabführkanal 20 und über die Ausströmöffnungen 21 in die Turbinenhauptströmung.

Der in Figur 2 dargestellte Deckbandkühlkanal 22 ist in dem Deckbandelement 14 im Wesentlichen parallel zu der Innenfläche 14i des Deckbandelements 14 mit einer Erstreckung über das gesamte Deckbandelement ausgebildet.

Der in Figur 2 dargestellte Schaufelkopf 13 umfasst hierzu eine erste Decklage 25, die das Schaufelblatt 15 abdeckt. Ferner ist im Bereich der Schaufelblatt-Vorderkante 16 und im Bereich der Schaufelblatt-Hinterkante 17 jeweils ein Abschlusssteg 26a und 26b angeordnet, der sich jeweils lotrecht zur ersten Decklage 25 von dieser aus erstreckt. Zwischen den Abschlussstegen 26a und 26b ist in einem Abstand zu der ersten Decklage 25 eine weitere Decklage 27 so angeordnet, dass der Zwischenraum zwischen der ersten Decklage 25 und der weiteren Decklage 27 den Deckbandkühlkanal 22 ergibt. Die Einlassöffnung 23 und die Auslassöffnung 24 sind in der ersten Decklage 25 ausgebildet. Während Schaufelfuß 11, Schaufelblatt 15, erste Decklage 25 sowie die Abschlussstege 26a und 26b als einteiliges Gussstück hergestellt sind, ist die weitere, zweite Decklage 27 erst nach der Fertigstellung des Gussstücks zwischen den Abschlussstegen eingesetzt und über eine NutVerbindung 28a und 28b fixiert. Die weitere, zweite Decklage 27 umfasst hier zwei Schichten 27a und 27b.

Wie insbesondere den Figuren 3 und 4 gut zu entnehmen ist, sind in dem Deckbandkühlkanal 22 sowie im Bereich der Abströmung aus dem Deckbandkühlkanal 22 zusätzlich Strömungsführungselemente 30, 31-d1 - 31-d11, 31-s1 - 31-s12, 32 angeordnet. Die Strömungsführungselemente 30, 31-d1 - 31-d11, 31-s1 - 31-s12, 32 dienen der Führung der durch den Deckbandkühlkanal strömenden Kühlfluidströmung 29b.

Innerhalb des Deckbandkühlkanals 22 sind, wie in Figur 4 dargestellt, als Strömungsführungselemente Kühlrippen 30, 31-d1 - 31-d11, 31-s1 -31-s12 angeordnet. Im Abströmbereich aus dem Deckbandkühlkanal 22 ist als Strömungsführungselement ferner ein Strömungsleitblech 32 angeordnet.

Sowohl die in dem Deckbandkühlkanal 22 angeordneten Kühlrippen 30, 31-d1 -31-d11, 31-s1 - 31-s12 als auch das im Abströmbereich angeordnete Strömungsleitblech 32 sind hier eingegossen.

Die in dem Deckbandkühlkanal 22 vorgesehenen Kühlrippen 30, 31-d1 - 31-d11, 31-s1 - 31-s12 dienen der Führung der durch den Deckbandkühlkanal 22 strömenden Kühlfluidströmung 29b. Die Kühlfluidströmung wird mittels der Kühlrippen 30, 31-d1 - 31-d11, 31-s1 - 31-s12 in einer vorbestimmten Weise so durch den Deckbandkühlkanal 22 geführt, dass eine optimale Kühlwirkung des Deckbandkühlkanals 22 erzielt wird, wobei die in den einzelnen Bereichen des Deckbandkühlkanals 22 bewirkte Kühlintensität variiert.

Das Deckbandelement 14 unterteilt sich hierzu in einen druckseitigen Bereich 34d, einen zentralen Bereich 34z sowie einen saugseitigen Bereich34s. Der Deckbandkühlkanal 22 erstreckt sich über alle drei Bereiche des Deckbandelements 14.

Im Bereich des Schaufelblattes 15 ist in dem Deckbandkühlkanal 22 eine zentrale Kühlrippe 30 mit einer dem Schaufelblatt 15 ähnlichen, jedoch im Wesentlichen nur den Bereich der Durchströmkanäle 19a-19d einrahmenden Kontur ausgebildet. Mittels der so konturierten zentralen Kühlrippe 30 wird das Kühlfluid in dem Deckbandkühlkanal 22 um den Hohlraumbereich des Schaufelblattes 15 herumgeführt. Der Hohlraumbereich des Schaufelblattes 15 ist in etwa der Bereich, in dem die Durchströmkanäle 19a-19d angeordnet sind und der somit eine nur geringe Temperaturbelastung erfährt bzw. ohnehin gekühlt wird.

Wie in Figur 4 dargestellt, verlaufen weiterhin die im druckseitigen Bereich 34d des Deckbandkühlkanals 22 angeordneten Kühlrippen 31-d1 - 31-d11 anders ausgerichtet als die im saugseitigen Bereich 34s des Deckbandkühlkanals 22 angeordneten Kühlrippen 31-s1 - 31-s12. Die im druckseitigen Bereich 34d des Deckbandkühlkanals 22 angeordneten Kühlrippen 31-d1 - 31-d11 verlaufen hier im Wesentlichen parallel zu der Strömungsrichtung der Hauptströmung der Schaufel, während die im saugseitigen Bereich 34s des Deckbandkühlkanals 22 angeordneten Kühlrippen 31-s1 - 31-s12 im Wesentlichen quer zu der Strömungsrichtung der Hauptströmung der Schaufel verlaufen. Es zeigte sich, dass die Kühlfluidströmung hierdurch im Betrieb der Strömungsmaschinenschaufel im druckseitigen Bereich 34d des Deckbandkühlkanals 22 eine größere Kühlleistung erbringt als im saugseitigen Bereich 34s des Deckbandkühlkanals 22.

Das Kühlfluid strömt über die im stromaufwärtigen Bereich des Deckbandelements angeordnete Einlassöffnung 23 in den Deckbandkühlkanal 22 ein. Bedingt durch die zentral angeordnete Kühlrippe 30, die einen dem Schaufelblatt ähnliche, jedoch im Wesentlichen nur den Bereich der Durchströmkanäle 19a-19d einrahmende Kontur aufweist, wird das in den Deckbandkühlkanal 22 eintretende Kühlfluid entweder auf den druckseitigen Bereich 34d des Deckbandkühlkanals 22 oder den saugseitigen Bereich 34s des Deckbandkühlkanals 22 aufgeteilt. Zunächst durchströmt das Kühlfluid in beiden Fällen jeweils zunächst einen Einströmabschnitt, in dem keine Kühlrippen angeordnet sind. Die Kühlrippen-freien Einströmabschnitte dienen dazu, dass sich das Kühlfluid gut über die gesamten Breite des Deckbandkühlkanals 22 ausbreiten kann. Hieran schließen sich jeweils Abschnitte an, in denen die Kühlrippen 31-d1 - 31-d11 bzw. 31-s1 -31-s12 angeordnet sind. Im druckseitigen Bereich 34d des Deckbandkühlkanals 22 verlaufen die Kühlrippen 31-d1 - 31-d11 im Wesentlichen parallel zu der Strömungsrichtung der Hauptströmung der Schaufel. Im Wesentlichen parallel zu der Strömungsrichtung der Hauptströmung umfasst hierbei Abweichungen von der Strömungsrichtung der Hauptströmung von 0° bis plus/minus 45°. Im saugseitigen Bereich 34s des Deckbandkühlkanals 22 verlaufen die Kühlrippen 31-s1 - 31-s12 im Wesentlichen quer zu der Strömungsrichtung der Hauptströmung der Schaufel. Im Wesentlichen quer zu der Strömungsrichtung der Hauptströmung umfasst hierbei Abweichungen von der quer zur Strömungsrichtung der Hauptströmung verlaufenden Richtung von 0° bis plus/minus 45°. Am Austritt aus den im druckseitigen Bereich 34d angeordneten Kühlrippen 31-d1 - 31-d11 strömt das Kühlfluid wieder in einen Kühlrippen-freien Sammelabschnitt und muß von dort um die Spitze der zentral angeordneten Kühlrippe 30 herumströmen, um schließlich zu der Auslassöffnung 24 des Deckbandkühlkanals 22 zu gelangen. Im saugseitigen Bereich 34s wird das Kühlfluid durch eine erste Gruppe 31-s1 - 31-s5 von Kühlrippen zunächst von der zentral angeordneten Kühlrippe 30 in Richtung des Eckenbereichs des Deckbandkühlkanals 22 weggeführt und anschließend über eine zweite Gruppe von Kühlrippen 31-s7 - 31-s10 wieder in Richtung der zentral angeordneten Kühlrippe 30 zurückgeführt. Eine mit der zentral angeordneten Kühlrippe verbundene, zwischen der ersten und der zweiten Gruppe angeordnete Kühlrippe 31-s6 verhindert, dass das Kühlfluid unmittelbar entlang der zentral angeordneten Kühlrippe 30 strömen kann. Stromab der zweiten Gruppe von Kühlrippen 31-s7 - 31-s10 und unmittelbar stromauf der Auslassöffnung 24 sind hier im saugseitigen Bereich 34s des Deckbandkühlkanals zwei weitere Kühlrippen 31-s11 und 31-s12 angeordnet, die parallel zu der Strömungsrichtung der Hauptströmung der Schaufel verlaufen. Diese beiden weiteren Kühlrippen 31-s11 und 31-s12 verhindern, dass das Kühlfluid nach dem Austreten aus der zweiten Gruppe von Kühlrippen 31-s7 - 31-s10 auf kürzestem Wege der Auslassöffnung 24 zuströmt, sondern bewirken ein hinreichendes Beströmen des Bereichs unmittelbar um die Auslassöffnung 24.

Zusätzlich zu der Führung der Kühlfluidströmung durch den Deckbandkühlkanal wird mittels der Kühlrippen 31-d1 - 31-d11 und 31-s1 - 31-s12 aber auch jeweils lokal die Oberfläche des Deckbandkühlkanals 22 vergrößert. Dies führt zu einer Steigerung der Wärmeübertragung in den Bereichen um die Kühlrippen, so dass hierdurch die Kühlleistung in diesen Bereichen jeweils lokal erhöht wird.

Insgesamt wird durch eine in dieser Weise ausgeführte Verteilung und Ausrichtung der Kühlrippen bewirkt, dass die zu kühlenden Bereiche 34d, 34s des Deckbandkühlkanals 22 von dem Kühlfluid flächendeckend durchströmt werden. Hierbei wird der druckseitige Bereich 34d des Deckbandkühlkanals 22 durch das den Deckbandkühlkanal durchströmende Kühlfluid 29b intensiver gekühlt wird als der saugseitige Bereich 34s des Deckbandkühlkanals 22. Dies ist aufgrund des Umstandes, dass in den druckseitigen Bereich ein im Vergleich der beiden Bereiche erhöhter Wärmeeintrag durch die Hauptströmung erfolgt, auch besonders erstrebenswert. Auch wird hierdurch die Kühleffizienz des zur Kühlung verwendeten Kühlfluids erhöht. Ferner wird die Gefahr einer Ausbildung von Hot-Spots insbesondere innerhalb des Deckbandelements erheblich verringert.

Das im Abströmbereich aus dem Deckbandkühlkanal angeordnete Strömungsleitblech 32 dient hingegen im Wesentlichen nur der Strömungsführung. Das Strömungsleitblech 32 bewirkt, dass das über die Auslassöffnung 24 aus dem Deckbandkühlkanal 22 austretende Kühlfluid 29b dem übrigen, durch die Durchströmkanäle 19a-19d strömenden Kühlmittelstrom 29a gleichmäßig und mit möglichst geringen Mischungsverlusten zugemischt wird. Hierzu ist das Strömungsleitblech 32 in etwa mittig in dem Übergangsbereich von dem vierten Durchströmkanal 19d in den zweiten Durchströmkanal 19b so positioniert, dass einerseits das aus dem vierten Durchströmkanal 19d kommende Kühlfluid 29a im Wesentlichen auf der Unterseite des Strömungsleitblechs 32 geführt und in Richtung des zweiten Durchströmkanals 19b umgelenkt wird und andererseits das aus dem Deckbandkühlkanal 22 kommende Kühlfluid 29b im Wesentlichen auf der Oberseite des Strömungsleitblechs 32 geführt wird. Stromab des Strömungsleitblechs 32 findet dann die Vermischung der bis dahin zueinander gleichgerichteten Kühlluftströme 29a und 29b statt. Durch die in dieser Weise bewirkte Vermischung der Kühlfluidströme 29a und 29b wird die Ausbildung von Strömungswirbeln weitgehend vermieden, so dass sich nur sehr geringe aerodynamische Mischungsverluste ergeben. Diese nahezu strömungsverlustfreie Vermischung wirkt wiederum unmittelbar auf die Kühlfluidströmung 29b innerhalb des Deckbandkühlkanals 22 zurück. Insbesondere wird durch die geführte Vermischung verhindert, dass es innerhalb des Deckbandkühlkanals 22 zu einem Rückstau der Kühlfluidströmung 29b kommt.

Im Bereich der Eintrittsöffnung 23 ist hier hingegen kein Strömungsleitblech angeordnet.

Wie in Figur 4 dargestellt, ist hier des Weiteren in dem saugseitigen Eckenbereich des Deckbandkühlkanals 22 eine Öffnung 33-s angeordnet, über die der Deckbandkühlkanal 22 mit der Schaufelumgebung kommuniziert. Im Betrieb der Strömungsmaschinenschaufel tritt durch diese Öffnung Kühlfluid aus dem Deckbandkühlkanal 22 in die Schaufelumgebung aus. Die als Bohrung ausgeführte Öffnung 33-s erfüllt hierbei primär die Funktion, dass Staub, der sich im saugseitigen Eckenbereich ansammelt, über die Öffnung 33-s abgeführt wird.

Weitere als Bohrungen ausgeführte Öffnungen 33-d1-33-d4... finden sich in der druckseitigen Begrenzungswand des Deckbandkühlkanals, wobei die Öffnungen 33-d1-33-d4... über die Begrenzungswand näherungsweise gleichverteilt angeordnet sind. An die druckseitige Begrenzungswand schließt sich in einer Anordnung der Schaufel in einer Turbine ein zweckmäßig in gleicher Weise ausgeführtes Deckbandelement einer benachbarten Schaufel an. Im Betrieb der Strömungsmaschinenschaufel strömt Kühlfluid aus dem Deckbandkühlkanal in den Spalt zwischen den Deckbandelementen der zueinander benachbarten Schaufeln und bewirkt hier eine Kühlung der den Spalt begrenzenden Wände.

Es hat sich gezeigt, dass durch die erfindungsgemäße Ausführung der Schaufel 10 eine sichere und effiziente Kühlung des Deckbandelements 14 über den gesamten Betriebsbereich der Turbine sichergestellt ist. Hot-Spots werden somit zuverlässig vermieden. Dies führt zu einer erhöhten Lebensdauer der Schaufeln.

Neben einer sicheren und effizienten Kühlung des Deckbandelements ist durch die Anordnung der Durchströmkanäle 19a-19d der in den Figuren 2 bis 4 dargestellten Schaufel und der hieraus resultierenden Kühlfluidströmung durch das Schaufelblatt eine hinreichende und effiziente Kühlung der gesamten Schaufel sichergestellt. Die hier gewählte Strömungsführung des Kühlfluids führt zu einer insgesamt verbesserten Kühleffektivität des Kühlfluids im Vergleich zu herkömmlichen, aus dem Stand der Technik bekannten Schaufeln.

Die in den Figuren 2 bis 4 dargestellte Strömungsmaschinenschaufel 10 stellt nur eine beispielhafte Ausführungsform der Erfindung dar, die in vielfältiger Weise von einem Fachmann ohne Weiteres modifiziert werden kann. So können beispielsweise die Ausströmöffnungen an der Schaufel-Hinterkante entfallen und die Kühlfluidabführung über einen im Schaufelfuß angeordneten Kühlfluidabführkanal erfolgen.

### Bezugszeichenliste

- 1: Gasturbogruppe
- 2: Verdichter
- 3: Brennkammer
- 4: Turbine
- 5: Welle
- 6: Leistungsverbraucher

- 10: Strömungsmaschinenschaufel
- 11: Schaufelfuß
- 12: Kühlfluidzuführung
- 13: Schaufelkopf
- 14: Deckbandelement
- 14ᵢ: Innenfläche des Deckbandelements
- 15: Schaufelblatt
- 16: Schaufelblatt-Vorderkante
- 17: Schaufelblatt-Hinterkante
- 18: Richtung der Hauptströmung
- 19a: erster Durchströmkanal
- 19b: zweiter Durchströmkanal
- 19c: dritter Durchströmkanal
- 19d: vierter Durchströmkanal
- 20: Kühlfluidabführkanal
- 21: Ausströmöffnung
- 22: Deckbandkühlkanal
- 23: Einlassöffnung
- 24: Auslassöffnung
- 25: erste Decklage
- 26a, 26b: Abschlussstege
- 27: zweite Decklage
- 27a, 27b: Schichten
- 28a, 28b: Nutverbindung
- 29a: Kühlfluidströmung durch die Durchströmkanäle
- 29b: Kühlfluidströmung durch den Deckbandkühlkanal
- 29b-s: Kühlfluidströmung durch den saugseitigen Bereich des Deckbandkühlkanals
- 29b-d: Kühlfluidströmung durch den druckseitigen Bereich des Deckbandkühlkanals
- 30: zentrale Kühlrippe
- 31-d1 - 31-d11: Kühlrippen im druckseitigen Bereich des Deckbandkühlkanals
- 31-s1 - 31-s12: Kühlrippen im saugseitigen Bereich des Deckbandkühlkanals
- 32: Strömungsleitblech
- 33-s: Öffnung im saugseitigen Bereich des Deckbandkühlkanals
- 33-d1 - 33-d4: Öffnungen im druckseitigen Bereich des Deckbandkühlkanals
- 34d: druckseitiger Bereich des Deckbandkühlkanals
- 34s: saugseitiger Bereich des Deckbandkühlkanals
- 34z: zentraler Bereich des Deckbandkühlkanals

- SL: Schaufellängsrichtung

## Patentansprüche

1. Strömungsmaschinenschaufel (10), insbesondere Turbinenschaufel einer Gasturbine oder Gasturbogruppe, mit einem Schaufelfuß (11), einem Schaufelkopf (13) und einem Schaufelblatt (15), das sich zwischen dem Schaufelfuß (11) und dem Schaufelkopf (13) in einer Schaufellängsrichtung erstreckt und eine Saugseite sowie eine Druckseite aufweist, wobei an dem Schaufelkopf ein Deckbandelement (14) und innerhalb des Schaufelblattes (15) wenigstens ein sich in Schaufellängsrichtung erstreckender Durchströmkanal (19a, 19b) angeordnet ist, und wenigstens längs eines Abschnitts des Deckbandelements (14) in dem Deckbandelement (14) ein Deckbandkühlkanal (22) ausgebildet ist, der über eine Öffnung mit dem Durchströmkanal verbunden ist und der im Betrieb der Strömungsmaschinenschaufel von einem Kühlfluid durchströmt wird, wobei in dem Deckbandkühlkanal und/oder in einer Zu- oder Abströmung zu dem Deckbandkühlkanal wenigstens ein Strömungsführungselement zur Führung wenigstens eines Teils der durch den Deckbandkühlkanal strömenden Kühlfluidströmung angeordnet ist, **dadurch gekennzeichnet, dass** ein erster Durchströmkanal (19a) an dem schaufelfußseitigen Ende mit einer Kühlfluidzuführung (12) und an dem schaufelkopfseitigen Ende mit dem schaufelkopfseitigen Ende eines zweiten Durchströmkanals (19b) verbunden ist, dass der zweite Durchströmkanal (19b) an dem schaufelfußseitigen Ende mit einer Kühlfluidabführung (20, 21) verbunden ist, dass der Deckbandkühlkanal (22) eine Einlassöffnung (23) und eine Auslassöffnung (24) umfasst, dass die Einlassöffnung (23) des Deckbandkühlkanals (22) in den ersten Durchströmkanal (19a) und die Auslassöffnung (24) des Deckbandkühlkanals (22) in den zweiten Durchströmkanal (19b) mündet, und dass nur im Bereich der Auslassöffnung (24) ein Strömungsleitblech (32) angeordnet ist.

2. Strömungsmaschinenschaufel gemäss Anspruch 1, **dadurch gekennzeichnet, dass** das Strömungsführungselement eine Kühlrippe (30, 31-d1 -31-d11, 31-s1 - 31-s12) ist.

3. Strömungsmaschinenschaufel gemäss Anspruch 2, **dadurch gekennzeichnet, dass** in dem Deckbandkühlkanal eine Mehrzahl von Kühlrippen (30, 31-d1 - 31-d11, 31-s1 - 31-s12) angeordnet sind.

4. Strömungsmaschinenschaufel gemäss einem der Ansprüche 2 oder 3, **dadurch gekennzeichnet, dass** die Kühlrippe bzw. die Mehrzahl von Kühlrippen (30, 31-d1 -31-d11, 31-s1 - 31-s12) in den Deckbandkühlkanal (22) eingegossen sind.

5. Strömungsmaschinenschaufel gemäss einem der vorhergehenden Ansprüche, **dadurch gekennzeichnet, dass** der Deckbandkühlkanal (22) schlitzförmig ausgebildet ist.

6. Strömungsmaschinenschaufel gemäss einem der vorhergehenden Ansprüche, wobei das Deckbandelement in einen druckseitigen Bereich (34d), einen zentralen Bereich (34z) und einen saugseitigen Bereich (34s) unterteilt ist, und der Deckbandkühlkanal (22) sich wenigstens teilweise über den druckseitigen Bereich (34d) des Deckbandelements und wenigstens teilweise über den saugseitigen Bereich (34s) des Deckbandelements erstreckt, **dadurch gekennzeichnet, dass** das Strömungsführungselement/die Strömungsführungselemente (30, 31-d1 - 31-d11, 31-s1 - 31-s12, 32) in dem druckseitigen Bereich des Deckbandkühlkanals und/oder in dem saugseitigen Bereich des Deckbandkühlkanals so angeordnet ist/sind, dass im Betrieb der Strömungsmaschinenschaufel die Kühlfluidströmung im druckseitigen Bereich des Deckbandkühlkanals eine größere Kühlleistung erbringt als im saugseitigen Bereich des Deckbandkühlkanals.

7. Strömungsmaschinenschaufel gemäss Anspruch 6, **dadurch gekennzeichnet, dass** eine Zuströmung des Kühlfluids zu dem Deckbandkühlkanal (22) in einem ersten Bereich des Deckbandelements und eine Abströmung aus dem Deckbandkühlkanal (22) in einem zweiten Bereich des Deckbandelements erfolgt, wobei der erste Bereich in Bezug auf eine Hauptströmung der Strömungsmaschinenschaufel stromauf des zweiten Bereichs angeordnet ist, und die im druckseitigen Bereich (34d) des Deckbandkühlkanals angeordneten Strömungsführungselemente im Wesentlichen parallel zu der Strömungsrichtung der Hauptströmung verlaufen und die im saugseitigen Bereich (34s) des Deckbandkühlkanals angeordneten Strömungsführungselemente (30, 31-d1 - 31-d11, 31-s1 - 31-s12, 32) im Wesentlichen quer zu der Strömungsrichtung der Hauptströmung verlaufen.

8. Strömungsmaschinenschaufel gemäss einem der vorhergehenden Ansprüche, **dadurch gekennzeichnet, dass** in dem Deckbandkühlkanal ein Strömungsführungselement (30) mit einer dem Schaufelblatt ähnlichen, im Wesentlichen den Bereich des wenigstens einen Durchströmkanals einrahmenden Kontur angeordnet ist.

9. Strömungsmaschinenschaufel gemäss einem der vorhergehenden Ansprüche, **dadurch gekennzeichnet, dass** das Strömungsführungselement ein Strömungsleitblech (32) ist.

10. Strömungsmaschinenschaufel gemäss einem der vorhergehenden Ansprüche, **dadurch gekennzeichnet, dass** in wenigstens einem Eckenbereich des Deckbandkühlkanals wenigstens eine Öffnung (33-s, 33-d1 - 33-d4) angeordnet ist, die mit der Schaufelumgebung kommuniziert und über die im Betrieb der Strömungsmaschinenschaufel Kühlfluid aus dem Deckbandkühlkanal in die Schaufelumgebung strömt.

11. Strömungsmaschinenschaufel gemäss einem der vorhergehenden Ansprüche, **dadurch gekennzeichnet, dass** die Strömungsmaschinenschaufel (10) eine Schaufel eines Stators einer Turbine ist.

12. Strömungsmaschinenschaufel gemäss einem der vorhergehenden Ansprüche, **dadurch gekennzeichnet, dass** der erste Durchströmkanal (19a) in dem Schaufelblatt (15) angrenzend an die Schaufelblatt-Vorderkante (16) angeordnet ist und der zweite Durchströmkanal (19b) in dem Schaufelblatt (15) angrenzend an die Schaufelblatt-Hinterkante (17) angeordnet ist.

13. Strömungsmaschinenschaufel gemäss einem der vorhergehenden Ansprüche, **dadurch gekennzeichnet, dass** zwischen dem ersten Durchströmkanal (19a) und dem zweiten Durchströmkanal (19b) in dem Schaufelblatt weiterhin wenigstens ein Paar weiterer Durchströmkanäle (19c, 19d) mit jeweils einer Erstreckung in Schaufellängsrichtung so angeordnet sind, dass die Durchströmkanäle (19a - 19d) einen serpentinenartigen Kanalverlauf in dem Schaufelblatt (15) ausbilden.

14. Strömungsmaschinenschaufel gemäss einem der vorhergehenden Ansprüche, **dadurch gekennzeichnet, dass** die Kühlfluidabführung wenigstens eine im Bereich der Schaufelblatt-Hinterkante angeordnete Ausströmöffnung (21) umfasst.

15. Turbinenstator mit einer Vielzahl von am Umfang nebeneinander angeordneten Strömungsmaschinenschaufeln, wobei wenigstens eine Strömungsmaschinenschaufel (10) gemäss einem der vorstehenden Ansprüche ausgeführt ist.

16. Turbinenstator gemäss Anspruch 15, **dadurch gekennzeichnet, dass** der Turbinenstator ein Eintrittsleitrad einer Turbine ist.

17. Gasturbogruppe mit wenigstens einer Strömungsmaschinenschaufel (10) gemäss einem der vorstehenden Ansprüche 1 bis 14.

## Claims

1. Turbomachine blade (10), in particular turbine blade of a gas turbine or gas turboset, having a blade root (11), a blade tip (13) and an airfoil (15) which extends between the blade root (11) and the blade tip (13) in a blade longitudinal direction and has a suction side and a pressure side, a shroud element (14) being arranged on the blade tip, and at least one throughflow passage (19a, 19b) which extends in the blade longitudinal direction being arranged inside the airfoil (15), and a shroud cooling passage (22) being formed in the shroud element (14) at least along a section of the latter, this shroud cooling passage (22) being connected via an opening to the throughflow passage, and a cooling fluid flowing through this shroud cooling passage (22) during operation of the turbomachine blade, wherein at least one flow-guiding element for guiding at least some of the cooling-fluid flow flowing through the shroud cooling passage is arranged in the shroud cooling passage and/or in an inflow or outflow to or from the shroud cooling passage, **characterized in that** a first throughflow passage (19a) is connected at the blade-root-side end to a cooling-fluid feed (12) and at the blade-tip-side end to the blade-tip-side end of a second throughflow passage (19b), **in that** the second throughflow passage (19b) is connected at the blade-root-side end to a cooling-fluid discharge (20, 21), **in that** the shroud cooling passage (22) comprises an inlet opening (23) and an outlet opening (24), **in that** the inlet opening (23) of the shroud cooling passage (22) opens into the first throughflow passage (19a) and the outlet opening (24) of the shroud cooling passage (22) opens into the second throughflow passage (19b), and **in that** a flow baffle plate (32) is arranged only in the region of the outlet opening (24).

2. Turbomachine blade according to Claim 1, **characterized in that** the flow-guiding element is a cooling rib (30, 31-d1 - 31-d11, 31-s1 - 31-s12).

3. Turbomachine blade according to Claim 2, **characterized in that** a plurality of cooling ribs (30, 31-d1 - 31-d11, 31-s1 - 31-s12) are arranged in the shroud cooling passage.

4. Turbomachine blade according to either of Claims 2 and 3, **characterized in that** the cooling rib or the plurality of cooling ribs (30, 31-d1 - 31-d11, 31-s1 - 31-s12) are integrally cast in the shroud cooling passage (22).

5. Turbomachine blade according to one of the preceding claims, **characterized in that** the shroud cooling passage (22) is of slot-shaped design.

6. Turbomachine blade according to one of the preceding claims, the shroud element being subdivided into a pressure-side region (34d), a central region (34z) and a suction-side region (34s), and the shroud cooling passage (22) extending at least partly over the pressure-side region (34d) of the shroud element and at least partly over the suction-side region (34s) of the shroud element, **characterized in that** the flow-guiding element/elements (30, 31-d1 - 31-d11, 31-s1 - 31-s12, 32) is/are arranged in the pressure-side region of the shroud cooling passage and/or in the suction-side region of the shroud cooling passage in such a way that the cooling-fluid flow produces greater cooling capacity in the pressure-side region of the shroud cooling passage than in the suction-side region of the shroud cooling passage during operation of the turbomachine blade.

7. Turbomachine blade according to Claim 6, **characterized in that** an inflow of the cooling fluid to the shroud cooling passage (22) is effected in a first region of the shroud element and an outflow from the shroud cooling passage (22) is effected in a second region of the shroud element, the first region being arranged upstream of the second region with regard to a main flow of the turbomachine blade, and the flow-guiding elements arranged in the pressure-side region (34d) of the shroud cooling passage running essentially parallel to the direction of the main flow, and the flow-guiding elements (30, 31-d1 - 31-d11, 31-s1 - 31-s12, 32) arranged in the suction-side region (34s) of the shroud cooling passage running essentially transversely to the direction of the main flow.

8. Turbomachine blade according to one of the preceding claims, **characterized in that** a flow-guiding element (30) having a contour similar to the airfoil and bordering essentially the region of the at least one throughflow passage is arranged in the shroud cooling passage.

9. Turbomachine blade according to one of the preceding claims, **characterized in that** the flow-guiding element is a flow baffle plate (32).

10. Turbomachine blade according to one of the preceding claims, **characterized in that** at least one opening (33-s, 33-d1 - 33-d4) which communicates with the blade surroundings is arranged in at least one corner region of the shroud cooling passage, via which opening (33-s, 33-d1 - 33-d4) cooling fluid flows from the shroud cooling passage into the blade surroundings during operation of the turbomachine blade.

11. Turbomachine blade according to one of the preceding claims, **characterized in that** the turbomachine blade (10) is the blade of a stator of a turbine.

12. Turbomachine blade according to one of the preceding claims, **characterized in that** the first throughflow passage (19a) is arranged in the airfoil (15) in such a way as to adjoin the airfoil leading edge (16), and the second throughflow passage (19b) is arranged in the airfoil (15) in such a way as to adjoin the airfoil trailing edge (17).

13. Turbomachine blade according to one of the preceding claims, **characterized in that**, furthermore, at least one pair of further throughflow passages (19c, 19d) which in each case extend in the blade longitudinal direction are arranged between the first throughflow passage (19a) and the second throughflow passage (19b) in the airfoil in such a way that the throughflow passages (19a - 19d) form a serpentine-like passage course in the airfoil (15).

14. Turbomachine blade according to one of the preceding claims, **characterized in that** the cooling-fluid discharge comprises at least one outflow opening (21) arranged in the region of the airfoil trailing edge.

15. Turbine stator having a multiplicity of turbomachine blades arranged side by side at the periphery, at least one turbomachine blade (10) being designed according to one of the preceding claims.

16. Turbine stator according to Claim 15, **characterized in that** the turbine stator is an inlet guide wheel of a turbine.

17. Gas turboset having at least one turbomachine blade (10) according to one of the preceding Claims 1 to 14.

## Revendications

1. Aube de turbomachine (10), en particulier aube de turbine d'une turbine à gaz ou d'un groupe de turbines à gaz, comprenant une embase d'aube (11), une tête d'aube (13) et une pale d'aube (15) qui s'étend entre l'embase d'aube (11) et la tête d'aube (13) dans une direction longitudinale de l'aube et qui présente un côté d'aspiration ainsi qu'un côté de compression, un élément de bande de recouvrement (14) étant disposé au niveau de la tête d'aube et au moins un canal d'écoulement (19a, 19b) s'étendant dans la direction longitudinale de l'aube étant disposé à l'intérieur de la pale d'aube (15), et au moins un canal de refroidissement de bande de recouvrement (22) étant réalisé dans l'élément de bande de recouvrement (14) le long d'une portion de l'élément de bande de recouvrement (14), lequel est connecté au canal d'écoulement par le biais d'une ouverture et lequel est parcouru par un réfrigérant pendant le fonctionnement de l'aube de turbomachine, au moins un élément de guidage d'écoulement pour le guidage d'au moins une partie de l'écoulement de réfrigérant s'écoulant à travers le canal de refroidissement de bande de recouvrement étant disposé dans le canal de refroidissement de bande de recouvrement et/ou dans un écoulement d'alimentation ou de sortie vers/depuis le canal de refroidissement de bande de recouvrment, **caractérisée en ce qu'**un premier canal d'écoulement (19a) est connecté, à l'extrémité du côté de l'embase d'aube, à une alimentation en réfrigérant (12) et, à l'extrémité du côté de la tête d'aube, à l'extrémité du côté de la tête d'aube d'un deuxième canal d'écoulement (19b), **en ce que** le deuxième canal d'écoulement (19b) est connecté au niveau de l'extrémité du côté de l'embase d'aube à une évacuation de réfrigérant (20, 21), **en ce que** le canal de refroidissement de bande de recouvrement (22) comprend une ouverture d'entrée (23) et une ouverture de sortie (24), **en ce que** l'ouverture d'entrée (23) du canal de refroidissement de bande de recouvrement (22) débouche dans le premier canal d'écoulement (19a) et l'ouverture de sortie (24) du canal de refroidissement de bande de recouvrement (22) débouche dans le deuxième canal d'écoulement (19b), et **en ce qu'**une tôle directrice de l'écoulement (32) est disposée seulement dans la région de l'ouverture de sortie (24).

2. Aube de turbomachine selon la revendication 1, **caractérisée en ce que** l'élément de guidage d'écoulement est une ailette de refroidissement (30, 31-d1 - 31-d11, 31-s1 - 31-s12).

3. Aube de turbomachine selon la revendication 2, **caractérisée en ce qu'**une pluralité d'ailettes de refroidissement (30, 31-d1 - 31-d11, 31-s1 - 31-s12) sont disposées dans le canal de refroidissement de bande de recouvrement.

4. Aube de turbomachine selon l'une quelconque des revendications 2 ou 3, **caractérisée en ce que** l'ailette de refroidissement ou la pluralité d'ailettes de refroidissement (30, 31-d1 - 31-d11, 31-s1 - 31-s12) sont coulées dans le canal de refroidissement de bande de recouvrement (22).

5. Aube de turbomachine selon l'une quelconque des revendications précédentes, **caractérisée en ce que** le canal de refroidissement de bande de recouvrement (22) est réalisé en forme de fente.

6. Aube de turbomachine selon l'une quelconque des revendications précédentes, dans laquelle l'élément de bande de recouvrement est divisé en une région côté compression (34d), une région centrale (34z) et une région côté aspiration (34s), et le canal de refroidissement de bande de recouvrement (22) s'étend au moins en partie sur la région côté compression (34d) de l'élément de bande de recouvrement et au moins en partie sur la région côté aspiration (34s) de l'élément de bande de recouvrement, **caractérisée en ce que** l'élément de guidage d'écoulement/les éléments de guidage d'écoulement (30, 31-d1 - 31-d11, 31-s1 - 31-s12, 32) est/sont disposés dans la région côté compression du canal de refroidissement de bande de recouvrement et/ou dans la région côté aspiration du canal de refroidissement de bande de recouvrement, de telle sorte que pendant le fonctionnement de l'aube de turbomachine, l'écoulement de réfrigérant dans la région côté compression du canal de refroidissement de bande de recouvrement produise une plus grande puissance de refroidissement que dans la région côté aspiration du canal de refroidissement de bande de recouvrement.

7. Aube de turbomachine selon la revendication 6, **caractérisée en ce qu'**il se produit un afflux de réfrigérant vers le canal de refroidissement de bande de recouvrement (22) dans une première région de l'élément de bande de recouvrement et une évacuation hors du canal de refroidissement de bande de recouvrement (22) dans une deuxième région de l'élément de bande de recouvrement, la première région étant disposée en amont de la deuxième région par rapport à un écoulement principal de l'aube de turbomachine, et les éléments de guidage d'écoulement disposés dans la région côté compression (34d) du canal de refroidissement de bande de recouvrement s'étendant essentiellement parallèlement au sens d'écoulement de l'écoulement principal et les éléments de guidage d'écoulement (30, 31-d1 - 31-d11, 31-s1 - 31-s12, 32) disposés dans la région côté aspiration (34s) du canal de refroidissement de bande de recouvrement s'étendant essentiellement transversalement au sens d'écoulement de l'écoulement principal.

8. Aube de turbomachine selon l'une quelconque des revendications précédentes, **caractérisée en ce qu'**un élément de guidage d'écoulement (30) ayant un contour similaire à la pale d'aube, encadrant essentiellement la région de l'au moins un canal d'écoulement, est disposé dans le canal de refroidissement de bande de recouvrement.

9. Aube de turbomachine selon l'une quelconque des revendications précédentes, **caractérisée en ce que** l'élément de guidage d'écoulement est une tôle directrice de l'écoulement (32).

10. Aube de turbomachine selon l'une quelconque des revendications précédentes, **caractérisée en ce qu'**au moins une ouverture (33-s, 33-d1 - 33-d4) est disposée dans moins une région de coin du canal de refroidissement de bande de recouvrement, laquelle ouverture communique avec un environnement de l'aube et par le biais de laquelle ouverture du réfrigérant s'écoule pendant le fonctionnement de l'aube de turbomachine hors du canal de refroidissement de bande de recouvrement dans l'environnement de l'aube.

11. Aube de turbomachine selon l'une quelconque des revendications précédentes, **caractérisée en ce que** l'aube de turbomachine (10) est une aube d'un stator de turbine.

12. Aube de turbomachine selon l'une quelconque des revendications précédentes, **caractérisée en ce que** le premier canal d'écoulement (19a) est disposé dans la pale d'aube (15) en position adjacente à l'arête avant de la pale d'aube (16) et le deuxième canal d'écoulement (19b) est disposé dans la pale d'aube (15) en position adjacente à l'arête arrière de la pale (17).

13. Aube de turbomachine selon l'une quelconque des revendications précédentes, **caractérisée en ce qu'**entre le premier canal d'écoulement (19a) et le deuxième canal d'écoulement (19b) dans la pale d'aube est disposée en outre au moins une paire de canaux d'écoulement supplémentaires (19c, 19d) ayant chacun une étendue dans la direction longitudinale de l'aube telle que les canaux d'écoulement (19a - 19d) aient une allure de canal en forme de serpentin dans la pale d'aube (15).

14. Aube de turbomachine selon l'une quelconque des revendications précédentes, **caractérisée en ce que** l'évacuation de réfrigérant comprend au moins une ouverture d'évacuation (21) disposée dans la région de l'arête arrière de la pale d'aube.

15. Stator de turbine comprenant une pluralité d'aubes de turbomachine disposées les unes à côté des autres sur la périphérie, au moins une aube de turbomachine (10) étant réalisée selon l'une quelconque des revendications précédentes.

16. Stator de turbine selon la revendication 15, **caractérisé en ce que** le stator de turbine est une roue directrice d'entrée d'une turbine.

17. Groupe de turbines à gaz comprenant au moins une aube de turbomachine (10) selon l'une quelconque des revendications 1 à 14.
